# EUROPÄISCHE PATENTANMELDUNG

(11) **EP 0 818 580 A2**
(43) Veröffentlichungstag der Anmeldung: **14.01.1998**
(21) Anmeldenummer: 97111785.8
(22) Anmeldetag: 10.07.1997
(51) Int. Cl.: E02D 31/00

(54) **Abdeckbahn für Altlastenkörper**

(30) Priorität: 10.07.1996 DE 19627709
(71) Anmelder: GEBRÜDER FRIEDRICH GMBH, 38229 Salzgitter-Salder (DE)
(72) Erfinder: Zimmermann, Jürgen, 38239 Salzgitter-Bleckenstedt (DE)
(74) Vertreter: Paul, Dieter-Alfred, Dipl.-Ing.

(57) **Zusammenfassung**

Die Erfindung betrifft eine Abdeckbahn (1) für Altlastenkörper, z. B. Müll- oder Kohlehalden oder dergleichen, mit einer auf einen Untergrund auflegbaren Dichtungsbahn (2), einer darauf angebrachten Drainagelage (3) und einer darauf verschiebefest vorgesehenen Filterschicht (5), die dadurch gekennzeichnet ist, daß die Drainagelage (3) durch eine Vielzahl von an der Oberseite der Dichtungsbahn (2) ausgebildeten Vorsprüngen (4) gebildet ist.

## Beschreibung

Die Erfindung betrifft eine Abdeckbahn für Altlastenkörper, z. B. Müll- oder Kohlehalden oder dergleichen, mit einer auf einen Untergrund auflegbaren Dichtungsbahn, einer darauf angebrachten Drainagelage und einer darauf verschiebefest vorgesehenen Filterschicht.

Im Stand der Technik ist es bekannt, Altlastenkörper, insbesondere Müllhalden, obenseitig mit einer Abdeckbahn zu versehen, auf die dann Mutterboden mit Pflanzen in einer Höhe von 30 bis 200 cm aufgebracht wird. Aufgabe der Abdeckung ist es dabei, ein Eindringen von Oberflächensickerwasser in den Altlastenkörper einerseits und unkontrollierte Emissionen aus dem Deponiekörper in den Boden und in die Atmosphäre andererseits zu vernindern.

Aus der DE-PS 34 44 895 ist es bekannt, die Abdeckbahn aus Sandwichplatten auszubilden, die jeweils eine untenliegende Dichtungsschicht, eine darüberliegende Drainageschicht und eine darauf liegende Filterschicht aus Vliesmaterial aufweisen. Das Sickerwasser, das von der Oberfläche der Deponieabdekung in den Wurzelboden eindringt, wird dabei von der Dichtungsschicht zurückgehalten und in der darüberliegenden Drainageschicht, die in Form eines Gitters ausgebildet ist, abgeführt. Die Filterschicht hat die Aufgabe, das Eindringen von feinen Bodenteilchen in die Drainageschicht zu verhindern.

Mit der bekannten Abdeckbahn ist zwar eine zufriedenstellende Abdichtung möglich, jedoch ist sie aufwendig in der Herstellung, da die einzelnen Schichten getrennt voneinander hergestellt und dann miteinander verklebt oder verschweißt werden müssen.

Der Erfindung liegt daher die Aufgabe zugrunde, eine Abdeckbahn der eingangs genannten Art so zu gestalten, daß sie einfach und günstig in der Herstellung ist.

Diese Aufgabe wird erfindungsgemäß dadurch gelöst, daß die Drainagelage durch eine Vielzahl von an der Oberseite der Dichtungsbahn ausgebildeten Vorsprüngen gebildet ist. Durch diese einstückige Ausbildung der Drainagelage in Form von Vorsprüngen an der Dichtungsbahn wird erreicht, daß Dichtungsbahn und Drainagelage in einem Arbeitsgang beispielsweise durch Spritzguß zusammen hergestellt werden können. Hierdurch wird die Herstellung im Vergleich zu den bekannten Abdeckbahnen, bei denen die einzelnen Schichten getrennt voneinander hergestellt und dann miteinander verschweißt werden müssen, deutlich vereinfacht.

Die Vorsprünge haben vorzugsweise eine einfache Gestalt, beispielsweise Noppenform, wobei sie so ausgestaltet sein müssen, daß sie bei gewünschter Dicke der Drainagelage von beispielsweise 5 bis 25 mm eine ausreichende Festigkeit haben und insbesondere nicht knicken.

Als Materialien für die Dichtungsbahn kommen Polyethylen, Polyvinylchlorid, Polypropylen, ECB und Ethylen/Vinylacetet-Copolymere in Frage. Für den Trennkörper können Polypropylen, Polyethylen und Polyamid verwendet werden. Als Material für das Filtervlies kommen Polypropylen, Polyester und Polyethylen zur Anwendung.

Für die Dichtungsbahn wird eine Dicke von 0,5 bis 4 mm vorgeschlagen.

Die Filterschicht ist vorzugsweise als Filtervlies mit einem Flächengewicht von 70 bis 800 g/m² ausgebildet. Auch hier sollten die Filterschicht und die Drainagelage durch thermische Verschmelzung oder Verklebung miteinander verbunden sein.

Nach einem weiteren Merkmal der Erfindung ist vorgesehen, daß die Dichtungslage außenseitig aufgerauht ist, damit sie nicht gegenüber dem Untergrund, auf dem sie aufgelegt ist, verrutschen kann. Besonders vorteilhaft ist, die Aufrauhung mit Hilfe einer Profilierung vorzusehen, beispielsweise durch vorspringende Stege oder durch Nuten.

Die Erfindung sieht desweiteren vor, daß die Dichtungsbahn an einer Längs- und einer Querseite Überlappungsbereiche aufweist, welche über die Drainagelage und die Filterschicht vorstehen. Der Überstand dient dazu, eine Überlappung mit einer benachbarten Abdeckbahn herzustellen und so eine gasdichte Abdichtung zu ermöglichen. Auf diese Weise kann die gesamte Abdeckung flüssigkeitsdicht gestaltet werden.

Desweiteren ist vorgeschlagen, daß die Drainagelage und die Filterschicht an einer Längs- und einer Querseite über die Dichtungsbahn vorstehen, um auch insoweit eine Überlappung mit benachbarten Abdeckbahnen zu ermöglichen. Vorzugsweise sollte dabei die Filterschicht an einer Längs- und einer Querseite über die Drainagelage vorstehende Überlappungsbereiche bilden, so daß die Filterschichten nicht nur aneinanderstoßen, sondern auch überlappen.

In der Zeichnung ist die Erfindung anhand eines Ausführungsbeispiels näher veranschaulicht. Es zeigen:
- Figur 1: das Ende einer Abdeckbahn in Schrägansicht und schematisch dargestellt,
- Figur 2: die Abdeckbahn gemäß Figur 1 in detaillierterer Darstellung und
- Figur 3: in geschnittener Seitenansicht zwei sich teilweise überlappende Abdeckbahnen.

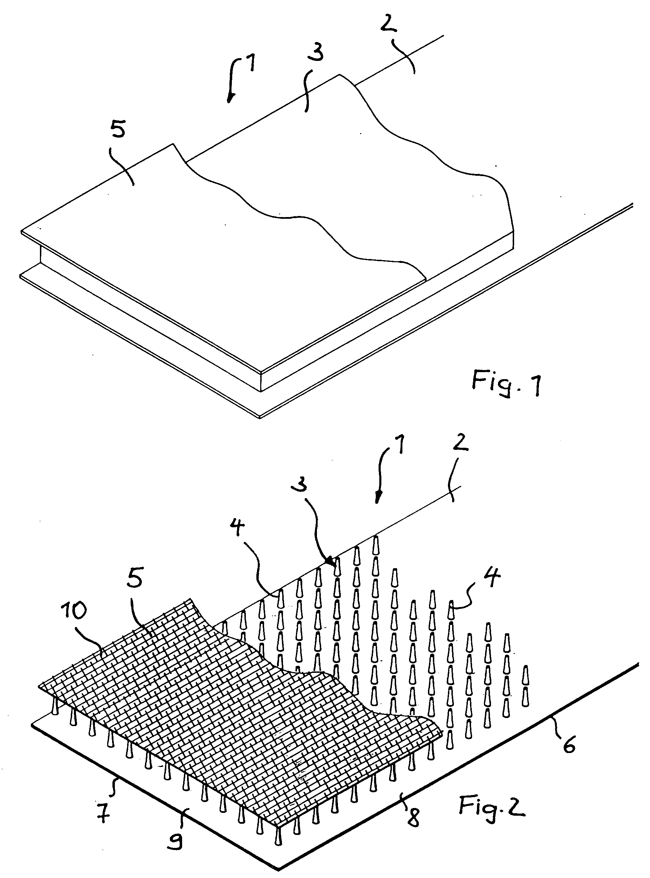

Die in den Figuren dargestellte Abdeckbahn 1 ist dreilagig aufgebaut. Sie hat an der Unterseite eine aus einer Kunststofffolie bestehende Dichtungsbahn 2, auf die eine Drainagelage 3 aufgebracht ist. Wie aus Figur 2 zu ersehen, besteht die Drainagelage 3 aus aus einer Vielzahl von Noppen 4, die parallel zueinander von der Oberfläche der Dichtungsbahn 2 vorstehen. Diese Ausbildung hat den Vorteil, daß die Noppen 4 zusammen mit der Dichtungsbahn 2 in einem Arbeitsgang beispielsweise durch Spritzgießen hergestellt werden kann. Auf die Drainagelage 3 ist eine aus einem Filtervlies bestehende Filterschicht 5 aufgebracht und mit der Drainagelage 3 verbunden, und zwar durch thermische Behandlung, die zu einer Verschweißung der Kontaktstellen der Noppen 4 mit der Filterschicht 5 geführt hat.

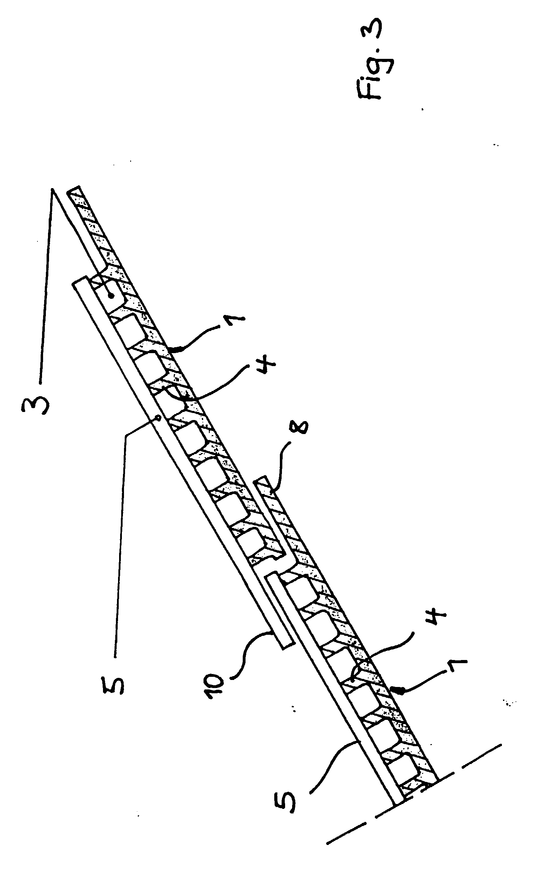

Die Drainagelage 3 erstreckt sich nicht über den gesamten Bereich der Dichtungsbahn 2, sondern läßt an einer Längsseite 6 und einer Querseite 7 jeweils einen Randstreifen frei. Außerdem ist die Filterschicht 5 derart gegenüber der Dichtungsbahn 2 versetzt angeordnet, daß die Dichtungsbahn 2 an der Längsseite 6 und der Querseite 7 im Bereich der noppenfreien Randbereiche Überlappungsbereiche 8, 9 bildet, die frei von Drainagelage 3 und Filterschicht 5 sind. Über diese Bereiche 8, 9 kann, wie in Figur 3 dargestellt ist, eine Überlappung mit benachbarten Abdeckbahnen 1 hergestellt werden.

Da die Filterschicht 5 die gleichen Abmessungen wie die Dichtungsbahn 2 hat, hat die vorgenannte Versetzung von Dichtungsbahn 2 und Filterschicht 5 zur Folge, daß die Filterschicht 5 an den den Überlappungsbereichen 8, 9 gegenüberliegenden Seiten Überlappungsbereiche 10 bildet, die frei von Filterschicht 5 und Drainagelage 3 sind, und über die ebenfalls eine Überlappung mit den benachbarten Abdeckbahnen hergestellt werden kann.

## Patentansprüche

1. Abdeckbahn (1) für Altlastenkörper, z. B. Müll- oder Kohlehalden oder dergleichen, mit einer auf einen Untergrund auflegbaren Dichtungsbahn (2), einer darauf angebrachten Drainagelage (3) und einer darauf verschiebefest vorgesehenen Filterschicht (5),
dadurch gekennzeichnet, daß die Drainagelage (3) durch eine Vielzahl von an der Oberseite der Dichtungsbahn (2) ausgebildeten Vorsprüngen (4) gebildet ist.

2. Abdeckbahn nach Anspruch 1,
dadurch gekennzeichnet, daß die Vorsprünge (4) noppenartig ausgebildet sind.

3. Abdeckbahn nach Anspruch 1 oder 2,
dadurch gekennzeichnet, daß die Dichtungsbahn (2) mit den Vorsprüngen (4) durch Spritzguß hergestellt ist.

4. Abdeckbahn nach einem der vorherigen Ansprüche,
dadurch gekennzeichnet, daß die Drainagelage (3) eine Dicke von 5 bis 25 mm hat.

5. Abdeckbahn nach einem der vorherigen Ansprüche,
dadurch gekennzeichnet, daß die Dichtungsbahn (2) aus einer Kunststoffolie besteht.

6. Abdeckbahn nach Anspruch 5,
dadurch gekennzeichnet, daß die Dichtungsbahn (2) eine Dicke von 0,5 bis 4 mm hat.

7. Abdeckbahn nach einem der Ansprüche 1 bis 6,
dadurch gekennzeichnet, daß die Filterschicht als Filtervlies (5) ausgebildet ist.

8. Abdeckbahn nach Anspruch 7,
dadurch gekennzeichnet, daß das Filtervlies (5) ein Flächengewicht von 70 bis 800 g/m² hat.

9. Abdeckbahn nach einem der Ansprüche 1 bis 8,
dadurch gekennzeichnet, daß die Filterschicht (5) und die Drainagelage (3) durch thermische Verschmelzung miteinander verbunden sind.

10. Abdeckbahn nach einem der Ansprüche 1 bis 9,
dadurch gekennzeichnet, daß die Dichtungsbahn (2) außenseitig aufgerauht ist.

11. Abdeckbahn nach Anspruch 10,
dadurch gekennzeichnet, daß die Dichtungsbahn (2) außenseitig mit einer Profilierung versehen ist.

12. Abdeckbahn nach einem der Ansprüche 1 bis 11,
dadurch gekennzeichnet, daß die Dichtungsbahn (2) an einer Längs- und einer Querseite (6, 7) Überlappungsbereiche (8, 9) aufweist, welche über die Drainagelage (3) und die Filterschicht (5) vorstehen.

13. Abdeckbahn nach einem der Ansprüche 1 bis 12,
dadurch gekennzeichnet, daß die Filterschicht (5) an einer Längs- und einer Querseite über die Dichtungsbahn (2) vorstehende Überlappungsbereiche (10) aufweist.
